# EUROPEAN PATENT SPECIFICATION

(11) **EP 0 630 804 B1**
(45) Date of publication and mention of the grant of the patent: **23.04.1997**
(21) Application number: 94201772.4
(22) Date of filing: 21.06.1994
(51) Int. Cl.: B62M 3/04

(54) **Crank device for the transmission of energy with elimination of dead centres, particularly suited for bicycles and the like**
Tretlager für Fahrrad oder dergleichen ohne Totpunkte
Dispositif de manivelle pour biyclette ou similaire sans points morts

(30) Priority: 22.06.1993 IT MI931343
(43) Date of publication of application: 28.12.1994
(73) Proprietor: SHIELDCROSS HOLDINGS LIMITED, Dublin 2 (IE)
(72) Inventor: Scaramozzino, Domenico, I-17100 Savona (IT)
(74) Representative: Zavattoni Gusmeroli, Maria Chiara

(56) References cited:
- FR-A- 763 303
- FR-A- 1 296 591
- GB-A- 815 772

## Description

In the field of energy transmission between components having a reciprocating motion and components having a rotating motion, continuous technical research has aimed at improving the efficiency of such transmissions.

In the bicycle sector, in particular, there has been a continuous effort to take greater advantage of the energy imparted to the pedals by the rider through the use of multipliers, gear ratios, gear selectors, etc.

The invention is intended to further improve the transmission performance between the energy imparted by the person or other means acting upon the pedal cranks or pedals, and the energy that can actually be used for the propulsion of, for example, bicycles and similar.

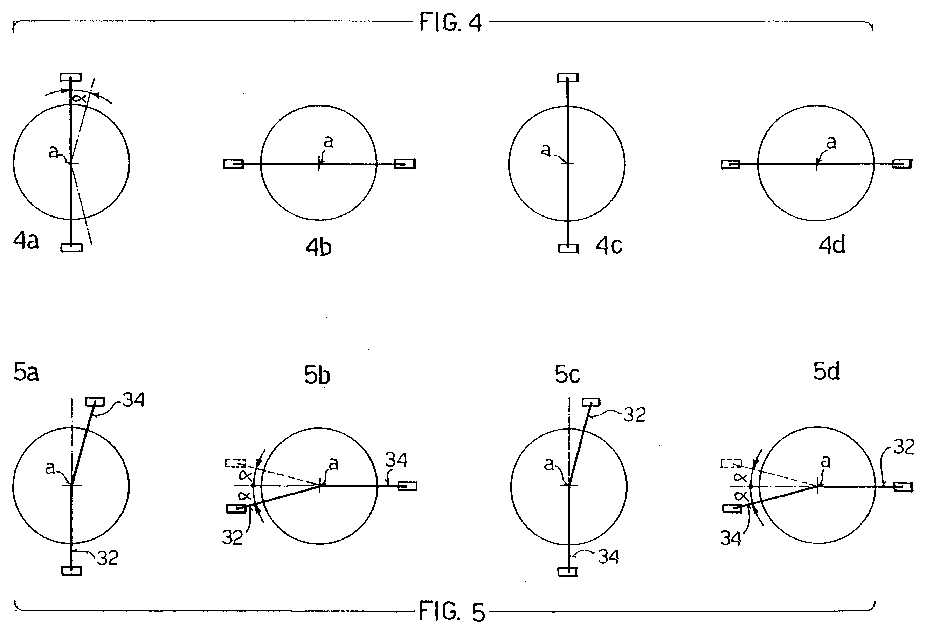

It was observed that, in prior art bicycles whose pedal cranks are connected together and rotatable around an axis coinciding with the axis of the chain drive sprocket wheel, the energy transmitted by the rider is variable according to the position of the pedals as they travel in a circular path around the axis of rotation; see figure 4. In fact, such energy is decidedly lower in the part where a traction force is exerted on the pedal (upward pedal travel) and significantly greater in the part where pressure is exerted on the pedal (downward pedal travel) and having two areas with no efficiency in the transmission of movement (dead centers), i.e., where the pedal cranks are both in a direction that substancially coincides with the directions of the forces acting upon the pedal cranks.

To explain in greater detail, during a single 360° clockwise rotation of pedals A-B, the pedal cranks consecutively assume the positions illustrated in steps 4a, 4b, 4c, 4d. The positions in which the pedal cranks are vertical (4a, 4c) or close to a vertical position (for simplicity's sake, only vertical positions will be mentioned hereafter), are virtually or completely inefficient for transmitting energy from the rider to the bicycle; from an inclined position at angle α, clockwise with respect to a vertical position, and for the entire arc of 180°-2α as indicated in figure 4a, the rider exerts a very effective pressure on the pedal traveling over said arc (pedal B in figure 4b, pedal A in figure 4d); and, if a suitable pedal is used, the rider can simultaneously exert a less effective traction force on the other pedal, A or B.

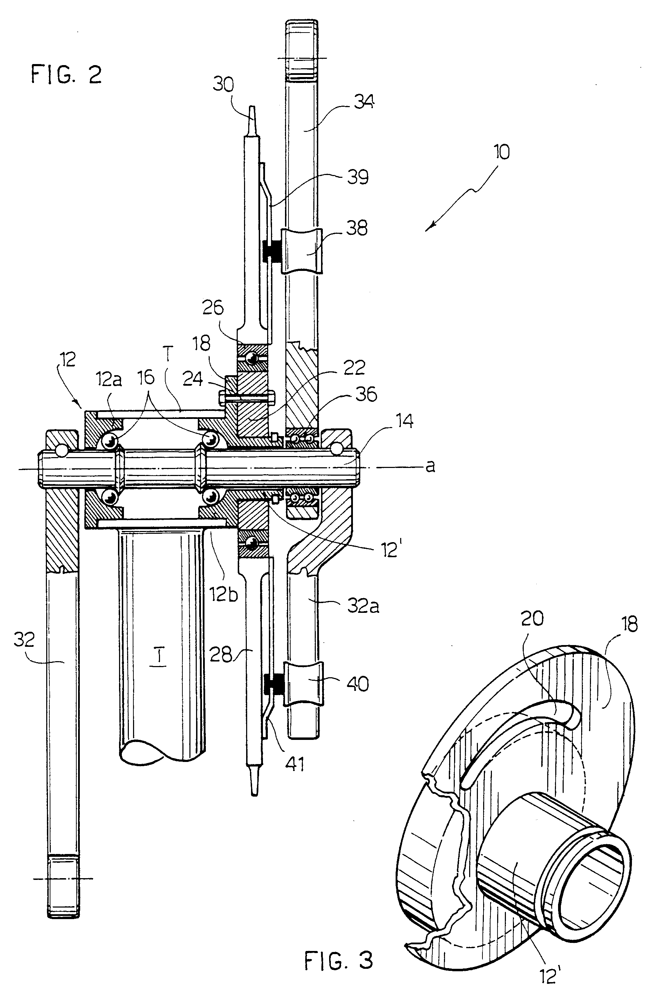

FR-A-763303 discloses a device according to the preamble of claim 1. The prior art device is shown with a fixed, non-modifiable eccentricity between the pedal cranks axis and the sprocket wheel axis; the sprocket wheel (figure 3) is mounted so as to be rotatable around the geometric axis of a block (18) of the bicycle frame, which block is provided with an eccentric seat for the shaft of the pedal crank. It is thus deduced that the support 18 must be larger than the standard supports formed in the present cycle frames. Moreover, in mass-produced cycles, it is not possible to assemble the sprocket wheel directly on the block, due to the bulky tubes of the frame welded thereto. As a matter of fact, according to the teachings of the French patent, in case one person wishes to apply said block to a cycle of the existing type, said block 18 should be an independent article to be clasped to the cycle by means of suitable brackets. This solution should cause unsurmountable problems with regard to weight, costs and positions which do not meet the present needs of the technique. Alternatively, the use of a block 18 as it is taught by the prior art patent involves the use of a nonstandard, but suitably formed frame for cycle, with the consequence that said device cannot be used as a fitting for existing cycles and causes problems concerning weight and costs.

Moreover, according to the teachings of FR-A-763303, the possibility of spacing out the pedal cranks axis and the wheel axis is limited, and neither adjustments of the spacing between said axes nor adjustments of the mutual position thereof are allowed.

An aim of the invention is to take advantage of the so-called positive areas of transmission and to reduce those areas considered to be of little or no transmission; in other words, the objective is to eliminate the "dead centre" positions in which the positions of the two pedal cranks are aligned with the relative forces acting upon said pedal cranks.

This objective has been achieved with a device as said in claim 1. Additional characteristics are mentioned in the dependent claims.

The new device includes two cranks or pedal cranks that are free to turn with respect to one another around the same axis of rotation which is parallel and spaced with respect to the axis of rotation of a chain drive sprocket wheel or similar component. The pedal cranks are also constrained to rotate together with the sprocket wheel but are free to travel over the wheel so that they can align with each other in at least one position where the plane of their axes includes the axis of the wheel.

The invention allows each pedal to travel through an arc of inefficient or little efficient positions more quickly with respect to an arc of efficient positions. The invention also allows always one pedal to be in the arc of the efficient positions; particularly, when one pedal is located with its crank in a vertical position with respect to the ground, the other pedal crank will be at an inclined position and ready for receiving a thrust.

The invention allows the pedalling force to be varied in a constant and continuous manner, concentrating this force in that pedalling range where power transmission efficiency is highest, and dispersing it in the areas where power transmission efficiency is lowest. The device allows the rider to choose the area, duration and intensity of force transmission within the range of a 360° pedal stroke. Furthermore, it also eliminates the dead centres since, at the moment when one pedal has finished its active pedaling stroke and is in a practically vertical position with respect to the ground, the other pedal will have passed the vertical position and will thus be ready to receive energy.

The invention will now be described in greater detail with reference to the enclosed drawings wherein an exemplary unrestrictive embodiment of the invention is shown. In the enclosed drawings:
- Figure 1: is a side view of a chain drive sprocket wheel of a bicycle of the invention;
- Figure 2: is a cross-section along plane 2-2 in figure 1; an aligned position of the pedals has been drawn in said plane;
- Figure 3: is a perspective view of an element of the device;
- Figure 4: schematically shows four positions of a prior art mechanism, which are respectively indicated by 4a, 4b, 4c, 4d;
- Figure 5: shows four positions of the device of the invention, which are respectively indicated by 5a, 5b, 5c, 5d and correspond to the positions given in figure 4.

The device as a whole, is indicated in the enclosed figures with reference 10. In the figures a per se known bicycle frame is partially shown and referenced T; this frame, which is composed of metal tubes, will not be described in detail since it is known. The frame has a support 12 made up of two parts: 12a and 12b. The support has a through seating for housing a shaft or hub 14. This shaft or hub is freely rotatable around a first axis a, and is mounted in the support by means of ball bearings 16.

Half-support 12b is equipped with a flange 18 having a slotted hole 20 extending in an arc around axis a, and tubular extension 12'.

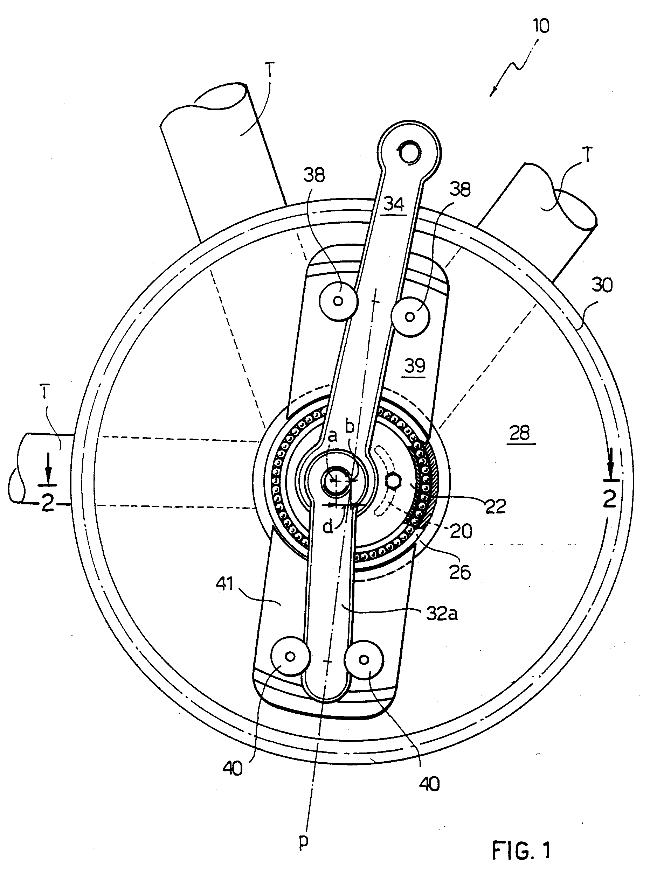

A disc 22 is mounted in a fixed eccentric manner on tubular extension 12'. The disc defines its own axis b (figure 1), spaced from a at distance d and parallel to a.

Disc 22 is attached to support 12 by any means; for example, by screws, such as 24 in figure 2, which engage a hole in disc 22 and slotted hole 20.

The periphery of disc 22 is equipped with ball bearing 26 on whose external ring is mounted a sprocket wheel 28 whose teeth 30 can engage the transmission or drive chain of the bicycle.

Shaft 14 mounts pedal crank 32 on the side of semi-support 12a, and auxiliary semi-pedal crank 32a on the other side, of semi-support 12b. Shaft 14 mounts the second pedal crank 34 which is free to rotate around the shaft by means of bearing 36. Each pedal crank can be constrained by any suitable system to rotate together with the sprocket wheel; on the figures, such system comprises a pair of idle rollers 38 integral with the sprocket wheel (through metal plate 39), for pedal crank 34, and a pair of idle rollers 40 integral with the sprocket wheel (through metal plate 41) for auxiliary pedal half-crank 32a. The position of the idle rollers on the wheel is such that a central plane between rollers 38 (line p in figure 1) coincides with a central plane between rollers 40 and also contains axis b. The rollers engage each pedal crank on either of its sides in such a way as to allow the pedal crank to slide freely along the rollers while at the same time constraining the pedal crank to rotate together with the sprocket wheel.

The constraint between the pedal cranks and the sprocket wheel can be created by mechanical systems other than rollers; e.g., by means of levers, tension rods or similar components.

It should be noted that screw 24 can attach wheel 28 to flange 18 in any of a number of angularly adjusted positions around axis a; in other words, the plane containing a and b may be inclined with respect to the horizontal, instead of being horizontal as shown in figure 1.

The operation of the device will now be described with reference to figure 5, and will simultaneously be compared to the operation of a prior art mechanism as depicted in figure 4.

As can be seen in step 5a in figure 5, when a pedal and its crank (i.e.: 32, 32a) on the new device is in the lower vertical position, the other pedal crank 34 has already passed the vertical position and is inclined by α, so that it is at the beginning of the active area of the pedalling arc and will allow for a more efficient pedalling stroke. When pedal crank 34 is about to reach a horizontal position, as illustrated in step 5b, pedal crank 32 travels quickly through arc 2α, as indicated in figure 5b, passing from a position that is inclined downwards by -α, with respect to the horizontal plane, then through a horizontal position and on to a position inclined by α, beyond the horizontal plane, so that a following rotation by 90°, as shown in figure 5c, takes pedal crank 34 to the lower vertical position; this corresponds to a position of pedal crank 32 inclined by α with respect to the vertical plane and to the beginning of the active area of the pedalling arc; thus, when an efficient pedalling thrust cannot be applied to pedal crank 34, it will be possible to apply an efficient thrust to pedal crank 32. Analogously, when pedal crank 32 moves to the horizontal position (step 5d), pedal crank 34 quickly travels over an arc extending from -α to +α, so that during the next 90° rotation, when pedal crank 32 moves to the lower vertical position, pedal crank 34 will move to angle α beyond the upper vertical position (step 5a) at which the pedal crank is ready for useful or active stroke.

## Claims

1. A crank device for transmission of energy, including a drive wheel (28) rotatable around a wheel axis (b), a pair of cranks (32, 34) rotatable around a crank axis (a), a support (12) containing said axis (a), said wheel axis (b) and said crank axis (a) being non-coincident; each of said cranks (32, 34) being free to rotate with respect to the other around said crank axis (a); one (32) of said cranks being integral with an auxiliary crank (32a) extending on the same side as the other crank (34); said auxiliary crank and said other crank being slidable over said wheel, means being provided to engage said wheel and cranks to rotate said wheel around said wheel axis (b), when said cranks are rotated around the crank axis
characterized in that
it further comprises a disc member (22) defining said wheel axis (b), said wheel being rotatable on said disc, said disc (22) being mounted on said support (12), and in that said support (12) defines the crank axis (a).

2. A device as in claim 1, characterized in that said cranks are aligned with each other along a plane that contains the axis (b) of the wheel, in a position in the rotation of said cranks.

3. A device as in claim 1, characterized in that said means to engage said wheel and cranks comprise pairs of idle rollers (38, 40) on the wheel.

4. A device as in claim 1, for bicycles and similar, characterized in that said cranks are pedal cranks, said crank axis (a) is defined in a frame housing of the bicycle and coaxial thereto; said drive wheel (28) is a sprocket wheel.

5. A device as in claim 4, said support being received in said frame and comprising a first semisupport (12a) on the side of a first crank (32) and a second semisupport (12b) on the side of the second crank (34) and half-crank (32')
characterized in that
said second semisupport (12b) has a hub (12')
said disc (22) being mounted on said hub.

6. A device as in claim 5, characterized in that said disc (22) is mounted on the hub (12') in an angularly adjustable way around the axis (a) of the hub, so that the disc can be fixed in various positions at different angles.

7. A device as in claim 1, characterized in that said means to engage wheel and cranks comprise levers or suitable tension rods.

8. A device as in claim 1 also mountable on existing cycles.

## Patentansprüche

1. Kurbeltriebvorrichtung zur Übertragung von Energie bestehend aus einem um eine Radachse (b) drehbaren Rad (28) zur Übertragung der Bewegung, aus einem um eine Achse (a) der Kurbel drehbarem Kurbelpaar (32,34), aus einem Lager (12), das die genannte Achse (a) enthält, wobei die genannte Radachse (b) und die genannte Kurbelachse (a) nicht zusammenfallen; jede der genannten Kurbeln (32, 34) sich in bezug auf die andere frei um die genannte Kurbelachse (a) dreht; eine (32) der genannten Kurbeln mit einer Hilfskurbel (32a) verbunden ist, die sich auf der selben Seite der anderen Kurbel (34) erstreckt; die genannte Hilfskurbel und die genannte andere Kurbel auf dem Rad verschiebbar sind, wobei Befestigungsvorrichtungen vorgesehen sind, um das genannte Rad und die Kurbeln an die Bewegung des genannten Rades um die genannte Radachse (b) zu binden, wenn die genannten Kurbeln um die Kurbelachse gedreht sind,
dadurch gekennzeichnet, daß
die Vorrichtung außerdem ein Scheibenelement (22) enthält, das die genannte Radachse (b) definiert, das genannte Rad auf der genannten Scheibe (22) drehbar ist, die genannte Scheibe auf dem genannten Lager (12) montiert ist und dadurch, daß das genannte Lager (12) die Kurbelachse (a) definiert.

2. Vorrichtung gemäß Anspruch 1, dadurch gekennzeichnet, daß die genannten Kurbeln untereinander in einer Ebene ausgerichtet sind, die die Radachse (b) enthält, in einer Stellung in der Drehung der genannten Kurbeln.

3. Vorrichtung gemäß Anspruch 1, dadurch gekennzeichnet, daß die genannten Befestigungsvorrichtungen Losrollen-Paare (38,40) auf dem Rad umfassen.

4. Vorrichtung gemäß Anspruch 1 für Fahrräder und ähnliches, dadurch gekennzeichnet, daß die genannten Kurbeln Tretkurbeln sind, die genannte Kurbelachse (a) in einem Lager des Fahrradgestells definiert und zu diesem koaxial und das genannte Übertragungsrad (28) ein Zahnrad ist.

5. Vorrichtung gemäß Anspruch 4, wobei das genannte Lager im genannten Gestell untergebracht ist und eine erste Lagerhälfte (12a) auf der Seite der ersten Kurbel (32) und eine zweite Lagerhälfte (12b) auf der Seite der zweiten Kurbel (34) und Halbkurbel (32') umfaßt, dadurch gekennzeichnet, daß die genannte zweite Lagerhälfte (12b) eine Nabe (12') hat und die genannte Scheibe (22) auf dieser Nabe montiert ist.

6. Vorrichtung gemäß Anspruch 5, dadurch gekennzeichnet, daß die genannte Scheibe (22) auf der Nabe (12') so montiert ist, daß sie um die Achse (a) der Nabe in Hinblick auf den Winkel verstellbar ist, so daß die Scheibe in verschiedenen Stellungen in verschiedenen Winkeln festgestellt werden kann.

7. Vorrichtung gemäß Anspruch 1, dadurch gekennzeichnet, daß die genannten Befestigungsvorrichtungen Hebel oder geeignete Zugstangen umfassen.

8. Vorrichtung gemäß Anspruch 1, auf existierenden Fahrrädern montierbar.

## Revendications

1. Dispositif de transmission d'énergie à système de manivelles, comprenant une roue (28) de transmission du mouvement tournant autour d'un axe (b) de la roue, une paire de manivelles (32, 34) tournant autour d'un axe (a) de la manivelle, un support (12) contenant ledit axe (a), ledit axe (b) de la roue et ledit axe (a) de la manivelle ne coïncidant pas; chacune des dites manivelles (32, 34) étant libre de tourner par rapport à l'autre autour du dit axe (a) des manivelles; une (32) des dites manivelles étant intégrale avec une manivelle auxiliaire (32a) qui s'étend sur le même côté que l'autre manivelle (34); cette manivelle auxiliaire et l'autre manivelle étant coulissantes sur ladite roue, des éléments d'engagement étant présents pour contraindre la roue et les manivelles à la rotation de la roue autour du dit axe (b) de la roue, lorsque l'on fait tourner les dites manivelles autour de l'axe des manivelles,
caractérisé par le fait que
il comprend en outre un élément à disque (22) qui définit ledit axe (b) de la roue, la roue tournant sur ledit disque, ledit disque (22) étant monté sur le support (12), et par le fait que ledit support (12) définit l'axe (a) des manivelles.

2. Dispositif selon la revendication 1, caractérisé par le fait que lesdites manivelles sont alignées entre elles selon un plan qui contient l'axe (b) de la roue, dans une position pendant la rotation des dites manivelles.

3. Dispositif selon la revendication 1, caractérisé par le fait que les éléments d'engagement comprennent des paires de rouleaux (38, 40) libres sur la roue.

4. Dispositif selon la revendication 1 pour bicyclettes et analogues, caractérisé par le fait que lesdites manivelles sont des manivelles de pédalier; ledit axe (a) de la manivelle est défini dans un logement du châssis de la bicyclette et coaxial par rapport à celui-ci; la roue de transmission (28) est une roue dentée.

5. Dispositif selon la revendication 4, le support étant accueilli dans le châssis et comprenant un premier demi-support (12a) sur le côté d'une première manivelle (32) et un deuxième demi-support (12b) sur le côté de la deuxième manivelle (34) et demi-manivelle (32')
caractérisé par le fait que
le deuxième demi-support (12b) a un moyeu (12')
le disque (22) étant monté sur le moyeu.

6. Dispositif selon la revendication 5, caractérisé par le fait que ledit disque (22) est monté sur le moyeu (12'), l'angle étant réglable, autour de l'axe (a) du moyeu, de sorte que le disque peut être fixé dans différentes positions à des angles différents.

7. Dispositif selon la revendication 2, caractérisé par le fait que les éléments d'engagement comprennent des leviers ou des tirants appropriés.

8. Dispositif selon la revendication 1 pouvant être installé sur des bicyclettes et analogues existants.
